# EUROPEAN PATENT APPLICATION

(11) **EP 1 925 366 A1**
(43) Date of publication of application: **28.05.2008**
(21) Application number: 07120678.3
(22) Date of filing: 14.11.2007
(51) Int. Cl.: B01L 3/00, F04B 43/04

(54) **Microchip inspection system and microchip inspection system program**

(30) Priority: 22.11.2006 JP 2006315368
(71) Applicant: Konica Minolta Medical & Graphic, Inc., Hino-shi, Tokyo 191-8511 (JP)
(72) Inventor: Sando, Yasuhiro Konica Minolta Technology Center, Inc, Tokyo 191-8511 (JP); Nakajima, Akihisa Konica Minolta Technology Center, Inc., Tokyo 191-8511 (JP); Higashino, Kusunoki Konica Minolta Technology Center, Inc., Tokyo 191-8511 (JP); Aoki, Youichi Konica Minolta Technology Center, Inc., Tokyo 191-8511 (JP)
(74) Representative: Henkel, Feiler & Hänzel

(57) **Abstract**

An objective is to provide a microchip inspection system in which an amount of driving liquid filled in a flow path between a micropump and a microchip is kept constant. Also disclosed is a microchip inspection system possessing a micropump by which driving liquid is injected into a microchip from a flow path; a driving liquid sensing device by which a sensing signal is output by sensing presence or absence of the driving liquid at a predetermined position of the flow path; and a pump driving control section by which the driving liquid is moved to a position based on the predetermined position as a reference position by driving the micropump in response to the sensing signal obtained from the driving liquid sensing device.

## Description

This application claims priority from Japanese Patent Application No. 2006-315368 filed on November 22, 2006, which is incorporated hereinto by reference.

### TECHNICAL FIELD

The present invention relates to a microchip inspection system and a microchip inspection system program.

### BACKGROUND

In recent years, by micro-machine technology and microscopic processing technology, systems have been developed in which devices and means (for example pumps, valves, flow paths, sensors and the like) for performing conventional sample preparation, chemical analysis, chemical synthesis and the like are micronized and integrated on a single chip (refer to Patent Document 1, for example). This is also called µ-TAS (Micro Total Analysis System), bioreactor, lab-on-chips, and biochips, and much is expected of their application in the fields of medical testing and diagnosis, environmental measurement and agricultural manufacturing. As seen in gene testing in particular, in the case where complicated steps, skilful operations, and machinery operations are necessary, a microanalysis system which is automatic, speedy and simple is very beneficial not only in terms of cost, required amount of sample and required time, but also in terms of achieving analyses, regardless of time and place.

In various analyses and tests, the quantitation of analysis, accuracy of analysis and economic factors with such analyzing chips (microchips) are of great importance. Consequently, it is desired to establish a liquid feeding system with a simple structure and highly reliability. A micro fluid control element with high accuracy and excellent reliability is demanded. The inventors have disclosed the operation principle of a micropump suitable for such the application in Patent Document 2.

The inventors have also disclosed a reaction-detecting apparatus by which reaction results can be measured by feeding liquid into a fine flow path by the micropump after sealing a reagent or such in a fine flow path of the microchip, and by flowing the reagent or such into a flow path constituting a reaction section and next into a flow path constituting a detection section (refer to Patent Document 1, for example). After feeding a driving liquid into the microchip by a micropump unit equipped with a plurality of micropumps, liquid-feeding control such as timing in which liquid is fed to the predetermined portion in the microchip, liquid quantity, a rate of change in liquid quantity, or a feeding direction thereof is conducted in such the reaction-detecting apparatus.
(Patent Document 1) Japanese Patent O.P.I. Publication No. 2004-28589
(Patent Document 2) Japanese Patent O.P.I. Publication No. 2001-322099
(Patent Document 3) Japanese Patent O.P.I. Publication No. 2006-149379

### SUMMARY

However, in cases when, for example, the reaction-detecting apparatus was left for a long time after using it previously, the driving liquid vaporized, whereby shown were variations of an amount of the driving liquid remaining in a flow path between the micropump and the microchip. In this case, even though the liquid-feeding control such as timing in which liquid is fed from the micropump, liquid quantity thereof or such is conducted at the same condition, no predetermined liquid-feeding tends to be controlled since timing in which the driving liquid is fed into the microchip, and liquid quantity thereof have a margin of error.

The present invention was made on the basis of the above-described situation. It is an object of the present invention to provide a microchip inspection system in which an amount of driving liquid filled in a flow path between a micropump and a microchip is kept constant before feeding the driving liquid into the microchip to control liquid-feeding with accuracy, and also to provide a microchip inspection system program.

### BRIEF DESCRIPTION OF THE DRAWINGS

Embodiments will now be described, by way of example only, with reference to the accompanying drawings which are meant to be exemplary, not limiting, and wherein like elements numbered alike in several figures, in which: Fig. 1 shows an external view of microchip inspection system 80 in the embodiments of the present invention; Fig. 2(a) shows a plan view of micropump unit 5 in the present invention; Fig. 2(b) shows the left side view; Fig. 2(c) shows the right side view; Fig. 2(d) shows a cross-sectional view at a section indicated by A - A in Fig. 2(a); Fig. 3(a-1) shows an illustrative diagram of an example of driving voltage E applied to piezoelectric element 112; Fig. 3(a-2) shows an illustrative diagram of an example of flow quantity Q; Fig. 3(b-1) shows an illustrative diagram of another example of driving voltage E applied to piezoelectric element 112; Fig. 3(b-2) shows an illustrative diagram of another example of flow quantity Q; Fig. 4(a) shows an external view of microchip 1; Fig. 4(b) shows the side view of microchip 1; Fig. 4(c) shows an illustrative diagram with which functions of fine flow paths and flow path elements in microchip 1 are explained; Fig. 5 shows a cross-sectional view of an example of an internal structure of reaction-detecting apparatus 82 in microchip inspection system 80 relating to the first embodiment; Fig. 6 shows a circuit block diagram of reaction-detecting apparatus 82 in the first embodiment of the present invention; Fig. 7 shows a flowchart to explain the procedure of inspection with microchip inspection system 80; Fig. 8 shows a flowchart of the driving liquid alignment routine; Fig. 9(a) shows an illustrative diagram to explain movement of driving liquid 4 during sensing the driving liquid; Fig. 9(b) shows an illustrative diagram to explain another movement of driving liquid 4 during sensing the driving liquid; Fig. 9(c) shows an illustrative diagram to further explain another movement of driving liquid 4 during sensing the driving liquid; Fig. 10 shows a cross-sectional view of an example of driving liquid sensing device 190 installed in microchip inspection system 80 in the second embodiment; and Fig. 11 shows a circuit block diagram of reaction-detecting apparatus 82 in the second embodiment.

### DESCRIPTION OF THE PREFERRED EMBODIMENTS

The object of the present invention is accomplished by the following structures.
(Structure 1) A microchip inspection system comprising a micropump by which driving liquid is injected into a microchip from a flow path; a driving liquid sensing device by which a sensing signal is output by sensing presence or absence of the driving liquid at a predetermined position of the flow path; and a pump driving control section by which the driving liquid is moved to a position based on the predetermined position as a reference position by driving the micropump in response to the sensing signal obtained from the driving liquid sensing device.
(Structure 2) The microchip inspection system of Structure 1, wherein the driving liquid sensing device comprises a light emission section by which light is emitted toward the flow path from a direction perpendicular to the flow path; a reception section by which light from the light emission section that passes through the flow path is received to generate a signal corresponding to the light quantity; and a sensing section by which a sensing signal is output by comparing a signal of the reception section with a predetermined value.
(Structure 3) The microchip inspection system of Structure 1, wherein the driving liquid sensing device further comprises two electrodes placed in the flow path, and a sensing section by which a sensing signal is output by comparing an electrical signal running between the two electrodes with a predetermined value.
(Structure 4) A microchip inspection system program commanded by a computer, comprising a driving liquid sensing step to output a sensing signal by sensing presence or absence of the driving liquid with a driving liquid sensing device placed at a predetermined position of a flow path to a microchip before a step to inject the driving liquid with a micropump; and a liquid-feeding step to move the driving liquid to a position based on the predetermined position as a reference position by driving the micropump in response to the sensing signal output in the driving liquid sensing step.

While the preferred embodiments of the present invention have been described using specific terms, such description is for illustrative purposes only, and it is to be understood that changes and variations may be made without departing from the spirit or scope of the appended claims.

### DETAILED DESCRIPTION OF THE INVENTION

Next, embodiments of the present invention will now be described referring to figures.

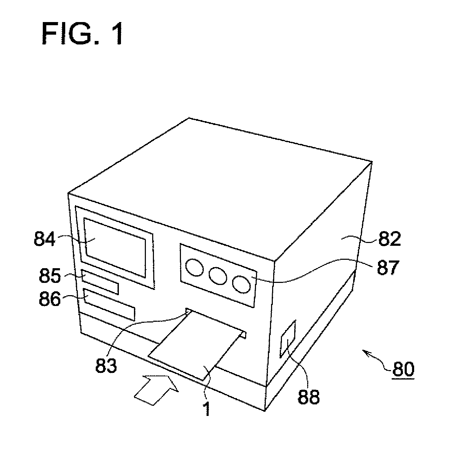

Fig. 1 shows an external view of microchip inspection system 80 in the embodiments of the present invention.

Microchip inspection system 80 of the present invention is composed of reaction-detecting apparatus 82 and microchip 1. Reaction-detecting apparatus 82 is an apparatus of displaying a result in display section 84 after automatically detecting reaction of a specimen previously fed into microchip 1 with a reagent. Reaction-detecting apparatus 82 comprises insertion slot 83, and microchip 1 is inserted into insertion slot 83 so as to set it in the inside of reaction-detecting apparatus 82.

Insertion slot 83 is designed to be sufficiently higher than thickness of microchip 1 so as not to bring insertion slot 83 into contact with microchip 1 during insertion. In addition, 85, 86, 87 and 88 are designated as a memory card slot, a print output slot, an operation panel and an external input-output terminal, respectively.

A person in charge of inspection inserts microchip 1 in the direction of an arrow shown in Fig. 1, and operates operation panel 87 to start inspection. Reaction in microchip 1 is automatically inspected in the inside of reaction-detecting apparatus 82 by feeding liquid such as driving liquid into microchip 1 with micropump unit 5 unshown in Fig. 1 via command of a control device. Results are displayed at display section 84 composed of a liquid display panel and so forth after terminating inspection. Via operation of operation panel 87, not only prints are output from print output slot 86, but also inspection results can be recorded in a memory card inserted into memory card slot 85. Data can also be stored in a personal computer and the like employing, for example, a LAN cable connected from external input-output terminal 88.

After terminating inspection, a person in charge of inspection removes microchip 1 from insertion slot 83.

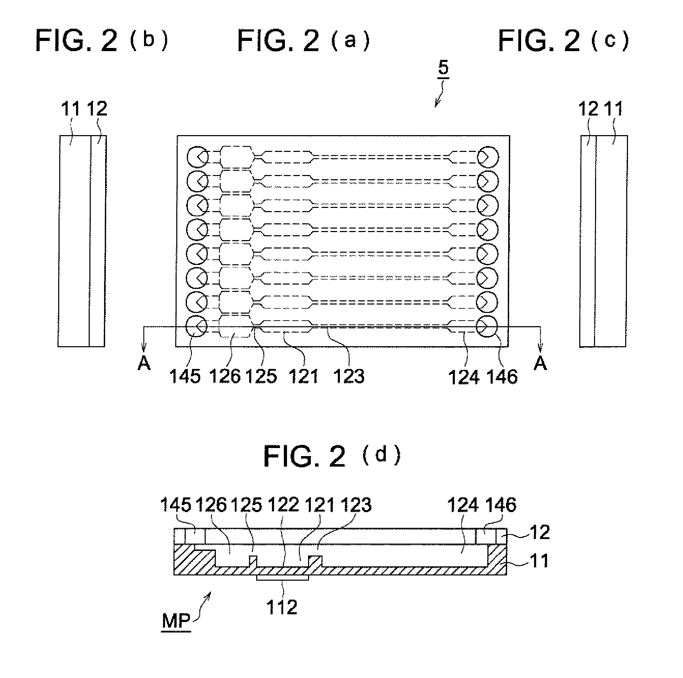

Next, an example of micropump unit 5 in the embodiment of the present invention will be described referring to Fig. 2 (a), Fig. 2(b), Fig. 2 (c) and Fig. 2(d).

Fig. 2(a) shows a plan view of micropump unit 5 in the present invention. Fig. 2(b) and Fig. 2(c) show the left side view and the right side view, respectively. Further, Fig. 2(d) shows a cross-sectional view at a section indicated by A - A in Fig. 2(a).

As shown in Fig. 2(a), Fig. 2(b), Fig. 2(c) and Fig. 2(d), micropump unit 5 comprises first substrate 11 and second substrate 12. In addition, groove portions formed in first substrate 11 are shown with a dotted line in Fig. 2(a).

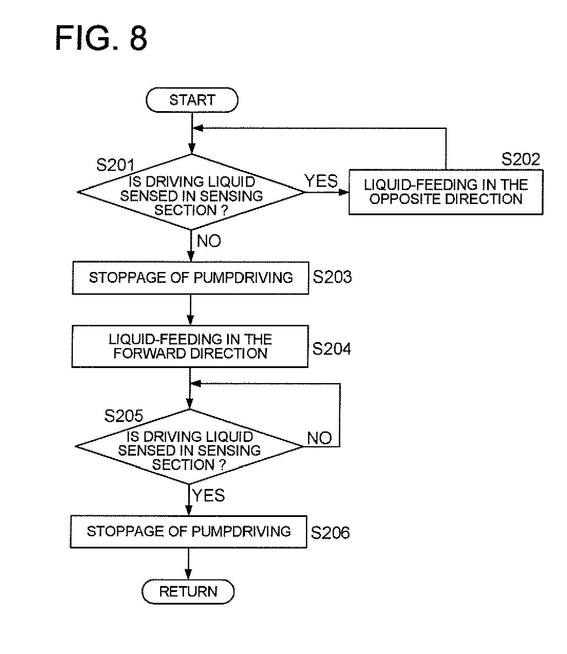

The section indicated by A - A in Fig. 2(a) constitutes a micropump MP, and liquid received from inlet/outlet 145, for example, by the after-mentioned micropump mechanism is discharged from inlet/outlet 146. Liquid received from inlet/outlet 146 in the opposite direction can also be discharged from inlet/outlet 145. In Fig. 2(a), 8 micropumps MP are formed in first substrate 11. These micropumps MP each have the same structure as to each other. The structure will be described below referring to Fig. 2(d).

First substrate 11 is a rectangular sheet being 17 mm wide, 35 mm long, and 0.2 mm thick. As shown in Fig. 2(d), each of micropumps MP formed in first substrate 11 comprises pump room 121, diaphragm 122, first throttle flow path 123, first flow path 124, second narrower flow path 125 and second flow path 126.

A silicon wafer is processed into the predetermined shape via a commonly known photolithography process to form first substrate 11. A patterned silicon substrate is etched to the predetermined depth employing an ICP dry etching apparatus.

After etching, first substrate 11 is cut into the predetermined outline shape from the silicon wafer by dicing. First substrate 11 has a thickness of approximately 0.2 mm.

As shown in Fig. 2(d), piezoelectric element 112 adheres onto the outer plane of diaphragm 122. Two electrodes to drive piezoelectric element 112 are pulled out to surfaces on the both sides of piezoelectric element 112, and connected to the unshown flexible wiring board.

Second substrate 12 is desired to be covered by closely attaching a flow path of each of micropumps MP formed in first substrate 11 to first substrate 11. In this case, it is preferred that the thermal expansion coefficient of second substrate 12 is as close to that of first substrate 11 as possible, and Pyrex glass (Pyrex is a registered trademark of Corning Glass Works), Tempax glass (Tempax is a registered trademark of Schott Glaswerk) and so forth are employed in cases where material used for first substrate 11 is silicon. These glasses have almost the same thermal expansion coefficient as that of a silicon substrate. Shape of second substrate 12 is the same 17 mm wide as that of first substrate 11, 35 mm long, and 1 mm thick.

Next, a process of producing holes of inlet/outlet 145 and inlet/outlet 146 of second substrate 12 is conducted by ultrasonic machining. After producing the holes, positioning is conducted so as to align both sides of second substrate 12 and first substrate 11 to join them by anodic bonding.

In such a way, micropump unit 5 can be produced. Micropump unit 5 receives liquid from one inlet/outlet 145, and discharges the liquid from another inlet/outlet 145 via operation of micropump MP described above. The direction of receiving liquid and the direction of discharging the liquid can be reversed by controlling driving voltage applied to piezoelectric element 112. In addition, the structure of first substrate 11 itself can be seen in Japanese Patent O.P.I. Publication No. 2001-322099 described in the foregoing BACKGROUND.

Next, the operation principle of micropump unit 5 will be described.

Second throttle flow path 125 has low flow path resistance when the differential pressure between on the flow-in side and on the flow-out side is close to zero, but the flow path resistance becomes large when the differential pressure becomes large. This causes the large pressure dependency. In the case of first throttle flow path 123, the flow resistance when the differential pressure is close to zero is larger than in the case of second throttle flow path 125, but there is little pressure dependency, not much of flow path resistance varies even though the differential pressure becomes large, and the flow path resistance when the differential pressure is large becomes smaller than second flow path 125.

Liquid flowing through a flow path (fluid) is arranged to generate a turbulent flow, depending on the differential pressure, or a laminar flow is arranged to be produced irrespective of the differential pressure to obtain such the flow path resistance characteristic. Specifically, it is possible to be realized, for example, by placing second throttle flow path 125 as a short orifice, placing first throttle flow path 123 having the same internal diameter as that of second throttle flow path 125, and setting a nozzle having a long flow path length.

Pumping operation in such a way that liquid is discharged in the direction of low flow path resistance can be realized by controlling a rate of change in pressure, together with generating the pressure in pump room 121, utilizing such the flow path resistance characteristic of first throttle flow path 123 and second throttle flow path 125.

In other words, liquid in pump room 121 is discharged from first throttle flow path 123 in cases where a rate of change in pressure is designed to be large in addition to the pressure increase in pump room 121, since the flow path resistance of second throttle flow path 125 becomes larger than the flow path resistance of first throttle flow path 123 because of generation of large differential pressure (liquid-discharging pracess). Liquid is received from second throttle flow path 125 to the inside of pump room 121 in cases where a rate of change in pressure is designed to be small in addition to the pressure reduction in pump room 121, since the flow path resistance of first throttle flow path 123 becomes larger than the flow path resistance of second throttle flow path 125 because of the differential pressure being maintained small (liquid-receiving process).

On the contrary, liquid in pump room 121 is discharged from second throttle flow path 125 in cases where a rate of change in pressure is designed to be small in addition to the pressure increase in pump room 121, since the flow path resistance of first throttle flow path 123 becomes larger than the flow path resistance of second throttle flow path 125 because of the differential pressure being maintained small (liquid-discharging process). Liquid is received from first throttle flow path 123 to the inside of pump room 121 in cases where a rate of change in pressure is designed to be large in addition to the pressure reduction in pump room 121, since the flow path resistance of first throttle flow path 123 becomes larger than the flow path resistance of second throttle flow path 125 because of generation of large differential pressure (liquid-receiving process).

In order to realize such the pressure control of pump room 121, driving voltage applied to piezoelectric element 112 is controlled, and a deformed amount of diaphragm 122 and timing thereof are also controlled.

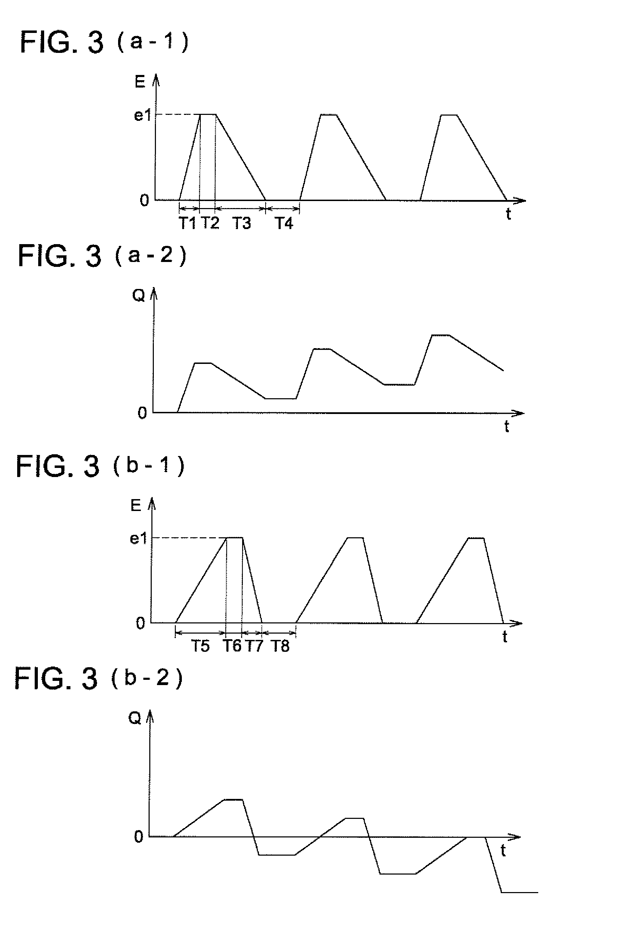

Fig. 3(a-1), Fig. 3(a-2), Fig. 3(b-1) and Fig. 3(b-2) show illustrative diagrams of the relationship of driving voltage E applied to piezoelectric element 112, and flow quantity Q. Pressure of pump room 121 is to be increased by applying high driving voltage to piezoelectric element 112.

Since the waveform shown in Fig. 3(a-1) exhibits T1 < T3, a rate of change in pressure when the pressure in pump room 121 increases is larger than a rate of change in pressure when the pressure in pump room 121 is reduced. Accordingly, liquid in the inside of pump room 121 is discharged from first throttle flow path 123 as described before.

Fig. 3(a-2) shows an example of flow quantity Q of liquid discharged from flow path 123 in flow path 124. Flow quantity Q flowing through flow path 124 is rapidly increased since pressure in pump room 121 is rapidly increased in a period of T1. When the pressure in pump room 121 is slowly reduced in a period of T3 after an idle period of T2, liquid is mainly received from second throttle flow path 125 to the inside of pump room 121, and a part of liquid is received from first throttle flow path 123 to the inside of pump room 121. Therefore, flow quantity Q is slowly reduced. However, flow quantity Q reduced in a period of T3 is less than flow quantity Q received in a period of T1, and more flow quantity Q is increased than that at the initial stage in an idle period of T4. In this case, flow quantity Q is increased by repeating cycles from T1 to T4.

On the other hand, since the waveform shown in Fig. 3(b-1) exhibits T7 < T5, a rate of change in pressure when the pressure in pump room 121 increases is smaller than a rate of change in pressure when the pressure in pump room 121 is reduced. Accordingly, liquid is flowed into the inside of pump room 121 from first throttle flow path 123 as described before.

Fig. 3(b-2) shows an example of flow quantity Q of liquid received from flow path 123 in flow path 124. A part of liquid is discharged from first throttle flow path 123 in a period of T5, since liquid is mainly discharged from second throttle flow path 125 when pressure in pump room 121 is slowly increased. Therefore, flow quantity Q is slowly increased. On the other hand, when the pressure in pump room 121 is rapidly reduced in a period of T7 after an idle period of T6, liquid is flowed into the inside of pump room 121 from first throttle flow path 123. However, flow quantity Q increased in a period of T5 is less than flow quantity Q discharged in a period of T7, and more flow quantity Q is reduced than that at the initial stage in an idle period of T8. In this case, flow quantity Q is reduced by repeating cycles from T5 to T8.

In Fig. 3(a-1) and Fig. 3(b-1), maximum voltage el is from a few volts to several tens of volts, and is up to about 100 volts. Periods of T1 and T7 each are about 20 µs, periods of T2 and T6 each are from zero to a few µs, and periods of T3 and T6 each is about 60 µs. Periods T4 and T8 may be zero. Driving voltage E has a frequency of about 11 kHz. The flow quantity shown in Fig. 3(a-2) and Fig. 3(b-2), for example, can be obtained for flow path 23 via driving voltage E shown in Fig. 3(a-1) and Fig. 3(b-1). In addition, flow quantity curves in Fig. 3(a-2) and Fig. 3(b-2) are schematically shown as flow quantity obtained via pumping operation, but practically, the inertial oscillation of fluid is superimposed. Thus, the curve obtained by superimposing an oscillating component on a flow quantity curve shown in each of these figures is designated as practically obtained flow quantity.

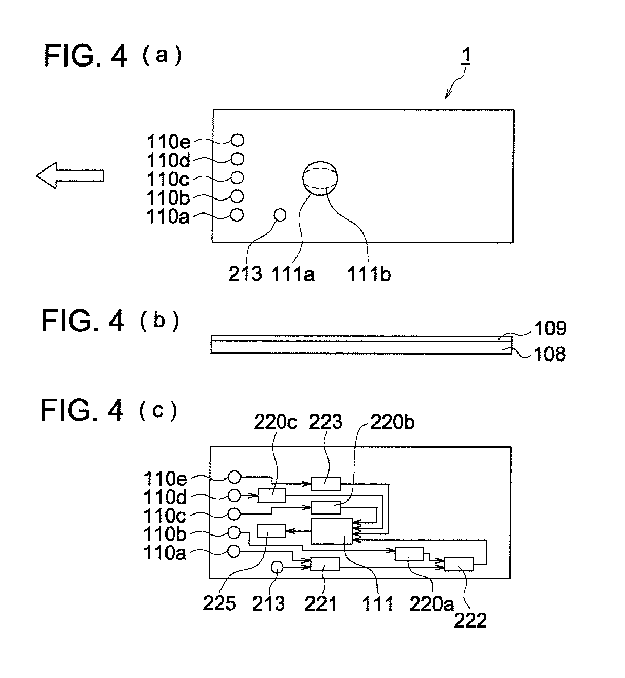

Next, an example of microchip 1 relating to embodiments of the present invention will be described referring to Fig. 4(a), Fig. 4(b) and Fig. 4(c).

Fig. 4(a) and Fig. 4(b) each show an external view of microchip 1. An arrow in Fig. 4 (a) indicates the direction of inserting microchip 1 into the after-mentioned reaction-detecting apparatus 82. Fig. 4(a) shows the upper surface of microchip 1 in the case of insertion. Fig. 4(b) shows the side view of microchip 1.

Window 111a and flow path 111b of a detection section in Fig 4(a) are provided to optically detect reaction between a specimen and a reagent, and are composed of transparent material such as glass, resin or such. Numerals 110a, 110b, 110c, 110d and 110e are driving liquid injection sections connected to fine flow paths in the inside of the microchip, and the internal reagent and so forth are driven by injecting driving liquid from each of the driving liquid injection sections 110a, 110b, 110c, 110d and 110e. Numeral 213 is designated as a specimen injection section to inject the specimen into microchip 1.

As shown in Fig. 4(b), microchip 1 is composed of groove-forming substrate 108 and coating substrate 109 to coat groove-forming substrate 108. Next, material used for groove-forming substrate 108 and coating substrate 109 constituting microchip 1 will be described.

Microchip 1 is desired to exhibit excellent properties such as processing-molding, water-absorption resistance, chemical resistance, weatherability and coat performance, and materials for Microchip 1 are selected by taking into account a structure, application and a detection method of microchip 1. Commonly known various ones are usable as these materials, and substrates and flow path elements are formed usually by using at least one material in combination depending on each of material properties.

Particularly, chips for clinical test of a large number of measuring specimens subjected especially to risks of contamination and infection are desired to be disposable. For this reason, a plastic resin exhibiting possible mass production, impact resistance together with lightweight and easy incineration disposal, for example, polystylene capable of easily fine processing, together with excellent transparency, an excellent mechanical property and an excellent molding property is preferable. When a chip is desired to be heated to approximately 100 °C for analysis, a resin exhibiting excellent heat resistance (for example, polycarbonate or such) is preferably usable. In cases when adsorption of protein causes a problem, polypropylene is preferably usable. Since resins, glass and so forth have small thermal conductivity coefficient, such the material is utilized in the region where a microchip is locally heated to suppress thermal conduction in the direction of the plane, whereby only the heated region can be selectively heated.

When product material and fluorescent material obtained via color reaction are optically detected at detection section 111, an optically transparent material such as alkali glass, quartz glass or transparent plastics is employed for a substrate at least in this section, and it is preferred that light is designed to transmit. In the present embodiments, an optically transparent material is used for a groove-forming substrate in which window 111a of the detection section and at least flow path 111b of the detection section are formed, and light is designed to pass through detection section 111.

Fine groove-shaped flow paths (fine flow paths) and functional components (flow path elements) to conduct inspection and specimen treatment are installed in microchip 1 relating to embodiments of the present invention in an appropriate form according to application. In the present embodiment, a treating example of inspection and amplification of specific genes conducted in microchip 1 by these fine flow paths and flow path elements will be described referring to Fig. 4(c). Incidentally, application in the present invention is not limited to microchip 1 described in Fig. 4(c), and microchip 1 can be applied for various applications.

Fig. 4(c) shows an illustrative diagram with which functions of fine flow paths and flow path elements in microchip 1 are explained.

Specimen reception section 221 to receive specimen liquid, reagent reception sections 220a, 220b and 220c to receive reagents and so forth are placed in the fine flow path. Reagents, cleaning liquid, modifying treatment liquid and so forth desired for reagent reception sections 220a, 220b and 220c have been received in advance so as to inspect quickly, irrespective of location and time. In Fig. 4(c), reagent reception sections 220a, 220b and 220c, specimen reception section 221 and flow path elements are represented by square, and the flow path element between the sections is represented by a solid line and an arrow.

Microchip 1 is composed of groove-forming substrate 108 in which fine flow paths are formed and coating substrate 109 to coat groove-shaped flow paths. The fine flow path is formed in the order of µm, and has a width of a few µm - several hundred µm, but preferably has a width of 10 - 200 µm. The fine flow path has a depth of 25 - 500 µm, and preferably has a depth of 25 - 250 µm.

At least the above-described flow path is formed in grooved-shaped substrate 108 of microchip 1. Coating substrate 109 needs to closely cover at least a fine flow path of a groove-forming substrate, and may cover the entire surface of the groove-forming substrate. In addition, sections to control liquid feeding, for example, such as an unshown liquid feeding control section, back-flow prevention section (check valve, active valve and so forth), and so forth are provided in the fine flow path of microchip 1 to feed liquid in the predetermined procedure for the prevention of back-flow.

Specimen injection section 213 is for injecting a specimen into microchip 1, and driving liquid injection sections 110a, 110b, 110c, 110d and 110e are for injecting driving liquid into microchip 1. Prior to inspection with microchip 1, a person in charge of inspection injects the specimen from specimen injection section 213 employing a syringe. As shown in Fig. 4(c), the specimen injected from specimen injection section 213 is received in specimen reception section 221 via the connected fine flow path.

Next, when the driving liquid is injected from driving liquid injection section 110a, the driving liquid pushes out the specimen received in specimen reception section 221 by passing through the connected fine flow path to feed the specimen into amplifying section 222.

On the other hand, driving liquid injected from driving liquid injection section 110b pushes out reagent a received in reagent reception section 220a by passing through the connected fine flow path. Reagent a pushed out from reagent reception section 220a is fed into amplifying section 222 by driving liquid. A part of amplifying section 222 is set to the predetermined temperature, depending on the reaction condition in this case, and reaction is conducted in the inside of reaction-detecting apparatus 82 via heating or heat absorption.

After the predetermined reaction time, a solution containing the specimen after reaction, which has been fed from amplifying section 222 by driving liquid, is further injected to detection section 111. The injected solution is fixed on a flow path wall by conducting reaction with a reaction material carried on the flow path wall of detection section 111.

Next, when the driving liquid is injected from driving liquid injection section 110c, the driving liquid pushes out reagent b received in reagent reception section 220b by passing through the connected fine flow path to inject it into detection section 111 from the fine flow path.

Similarly, when the driving liquid is injected from driving liquid injection section 110d, the driving liquid pushes out the reagent received reagent reception section 220c by passing through the connected fine flow path to inject it into detection section 111 from the fine flow path.

Finally, the driving liquid is injected from driving liquid injection section 110e, and the driving liquid pushes out cleaning liquid from cleaning liquid reception section 123 to inject it into detection section 111. Unreacted solution 41 remaining in detection section 111 is washed with cleaning liquid.

After washing, concentration of reactants adsorbed on the flow path wall of detection section 111 is optically measured to detect a detected material such as amplified injected to detection section 111. The injected solution is fixed on a flow path wall by conducting reaction with a reaction material carried on the flow path wall of detection section 111.

Next, when the driving liquid is injected from driving liquid injection section 110c, the driving liquid pushes out reagent b received in reagent reception section 220b by passing through the connected fine flow path to inject it into detection section 111 from the fine flow path.

Similarly, when the driving liquid is injected from driving liquid injection section 110d, the driving liquid pushes out the reagent received reagent reception section 220c by passing through the connected fine flow path to inject it into detection section 111 from the fine flow path.

Finally, the driving liquid is injected from driving liquid injection section 110e, and the driving liquid pushes out cleaning liquid from cleaning liquid reception section 123 to inject it into detection section 111. Unreacted solution 41 remaining in detection section 111 is washed with cleaning liquid.

After washing, concentration of reactants adsorbed on the flow path wall of detection section 111 is optically measured to detect a detected material such as amplified genes and so forth. In this case, the predetermined treatment is conducted in the inside of microchip 1 by sequentially injecting the driving liquid from driving liquid injection sections 110a, 110b, 110c, 110d and 110e.

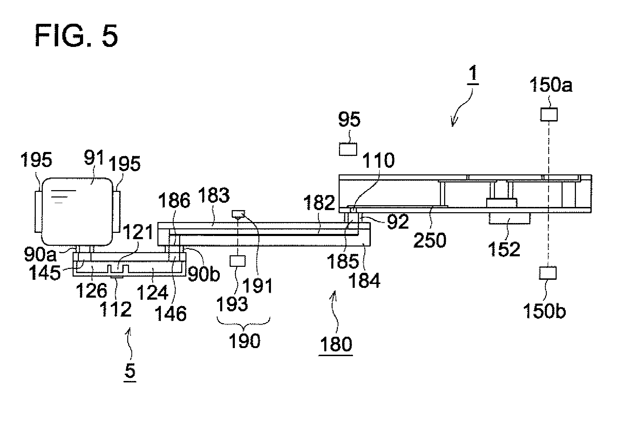

Fig. 5 shows a cross-sectional view of an example of an internal structure of reaction-detecting apparatus 82 in microchip inspection system 82 relating to the first embodiment. Reaction-detecting apparatus 82 is composed of temperature adjusting unit 152, light detection sections 150a and 150b, intermediate flow path section 180, micropump unit 5, packing 90a, packing 90b, driving liquid tank 91, liquid temperature adjusting unit 195 and so forth. After this, the same numbers will be provided for the same structure elements as described before, and the description is omitted.

A situation where the upper surface of microchip 1 is closely attached to temperature adjusting unit 152 and micropump unit 5 is shown in Fig. 5. Microchip 1 is driven by an unshown driving member, and movable in the upward and downward direction with respect to the paper sheet surface.

At an initial stage, microchip 1 is capable of being inserted and removed in the longitudinal direction with respect to the paper sheet, and a person in charge of inspection inserts microchip 1 from insertion slot 83 until touching the unshown regulation member. When microchip 1 inserted up to the predetermined position, chip sensing section 95 fitted with a photointerrupter and so forth detects microchip 1 to switch ON.

Temperature adjusting unit 152 is a unit in which a Peltiert element, a power supply device, a temperature control device and so forth are installed, and heat is generated or absorbed to adjust the lower surface of microchip 1 to the predetermined temperature.

When an unshown control section receives a signal having chip sensing section 95 switched ON, microchip 1 is lowered by the driving member, and the lower surface of microchip 1 is closely attached to intermediate flow path 180 by pressure via temperature adjusting unit 152 and packing 92.

When microchip 1 is closely attached to packing 92, driving liquid injection section 110 of microchip 1 is placed at the position where it is connected to the corresponding opening 185 provided for intermediate flow path section 180. Intermediate flow path section 180 is composed of transparent first substrate 184 having grooves in intermediate flow path 182 and transparent second substrate 183 covering first substrate 184, and openings 185 and 186 are provided at both ends of intermediate flow path 182. Opening 186 is connected to inlet/outlet 146 of micropump unit 5 via packing 90b.

Driving liquid tank 91 is connected on the suction side of micropump unit 5 via packing 90a, the driving liquid filled in driving liquid tank 91 is designed to be sucked in via packing 90a. On the other hand, since inlet/outlet 146 placed at the end portion on the discharge side of micropump unit 5 is connected to driving liquid injection section 110 of microchip 1 via intermediate flow path 182, the driving liquid fed from micropump unit 5 is injected into flow path 250 formed in microchip 1 from driving liquid injection section 110 of microchip 1. The driving liquid is injected into driving liquid injection section 110 from microchip unit 5 in this way.

Liquid temperature adjusting unit 195 is a unit in which a Peltiert element, a power supply device, a temperature control device and so forth are installed, and heat is generated or absorbed to adjust driving liquid tank 91 to the predetermined temperature. Incidentally, in the present embodiment, liquid temperature adjusting unit 195 is placed so as to closely attach driving liquid tank 91, but the present invention is not limited thereto, and liquid temperature adjusting unit 195 may be installed in the inside of driving liquid tank 91.

In order to measure a flow rate of the driving liquid running through intermediate flow path 182, driving liquid sensing device 190 is installed for intermediate flow path section 180. Driving liquid sensing device 190 is composed of first light emission section 193, first light reception section 191 and sensing section 310 unshown in Fig. 5.

First light emission section 193 is a light emitting element such as a LED or a lamp. First light emission section 193 is a light receiving element such as a photodiode, and receives light emitted by first light emission section 193 via transparent intermediate flow path section 180. When the driving liquid flows through intermediate flow path 182, an amount of light passing through intermediate flow path 182 is reduced, and signal current of first light reception section 191 is also reduced.

Sensing section 310 is composed of an amplifier such as an operation amplifier, a comparator to compare with the predetermined value, a power supply section and so forth. Sensing section 310 converts signal current of first light reception section 191 into voltage, and compares the voltage obtained from the signal current of first light reception section 191 with the predetermined voltage which has been set in advance. When the voltage obtained from the signal current of first light reception section 191 is smaller than the predetermined voltage which has been set in advance, sensing section 310 is regarded to have sensed driving liquid, and a sensing signal of the driving liquid is output. In addition, when the voltage obtained from the signal current of first light reception section 191 is smaller than the predetermined voltage, a circuit structure to output the driving liquid may also be introduced.

First light emission section 193 and first light reception 191 are placed at the predetermined position in intermediate flow path 182 so as to be in the direction perpendicular to intermediate flow path 182, as shown in Fig. 5. As described in detail later, unshown pump driving control section 412 moves driving liquid in intermediate flow path 182 by controlling a micropump, and the driving liquid is stopped at the position where sensing section 310 generates the sensing signal.

Incidentally, in the present embodiment, driving liquid sensing device 190 is provided for intermediate flow path 180, but the place where driving liquid sensing device 190 is provided is not limited to intermediate flow path 180. Further, intermediate flow path 180 is not always necessary, and driving Liquid sensing device 190 may be provided so as to sense driving liquid running through first flow path 124, for example.

In the present embodiment, driving liquid of intermediate flow path 182 is also sensed by transmitted light, but the present embodiment is not limited to transmitted light, and the driving liquid may be sensed by reflected light.

Further, 8 micropumps MP are provided in an example of micropump unit 5 shown in Fig. 2, but all the micropumps MP are not necessary. In the case of microchip 1 shown in Fig. 3, driving liquid injection section 110 may be placed so as to be connected to 5 micropumps MP.

A reagent stored in the inside of microchip 1 is reacted with a specimen in detection section 111 of microchip 1 to give coloring, light emission, fluorescence, opacity and such, for example. As shown in Fig. 3 according to the present embodiment, results of reaction with the reagent in detection section 111 are optically detected. The light detection section is composed of second light emission section 150a and second light reception section 150b, and placed so as to detect light passing through detection section 111 of microchip 1.

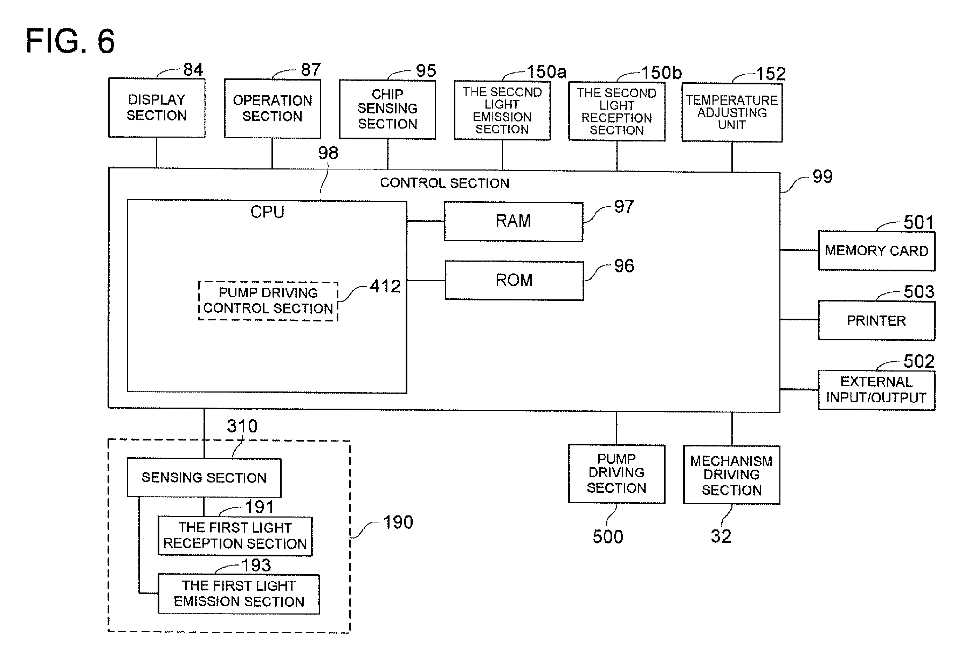

Fig. 6 shows a circuit block diagram of reaction-detecting apparatus 82 in the first embodiment of the present invention.

Control section 99 is composed of CPU 98 (Central Processing Unit), RAM 97 (Random Access Memory), ROM 96 (Read Only Memory) and so forth, and a program stored in ROM 96 as a nonvolatile memory section is read out in RAM 97 to control each section of reaction-detecting apparatus 82 in a concentrated manner in accordance with the program.

After this, the same numbers will be provided for the functional block having the same function as the function described before, and the description is omitted.

Chip sensing section 95 transmits the sensing signal into CPU98 when microchip 1 touches the regulation member. When CPU98 receives the sensing signal, microchip 1 is lowered or elevated by the predetermined procedure via command to mechanism driving section 32.

Pump driving section 500 is a driving section to drive piezoelectric element 112 of each micropump 112. Pump driving control section 412 controls pump driving section 500 in accordance with the program so as to inject or absorb the predetermined amount of driving liquid. Driving voltage E having the waveform as shown in Fig. 3 is generated when pump driving section 500 receives the command of pump driving control section 412 to drive piezoelectric element 112.

CPU98 is operated to inspect via the predetermined sequence to record inspection results in RAM 97. The inspection results can be recorded in memory card 501 by operating operation section 87, and can also be printed employing printer 503.

Driving liquid sensing device 190 in the present embodiment is composed of first light emission section 193, first light reception section 191 and sensing section 310. First light emission section 193 emits light via command of CPU98. Change in light quantity caused by passing through driving liquid is sensed by sensing section 310 to generate the sensing signal, and to input it into CPU 98. Incidentally, in the present embodiment, change in light quantity is sensed by transmitted light, but the present embodiment is not limited to the transmitted light, and the change in light quantity may also be sensed by reflected light.

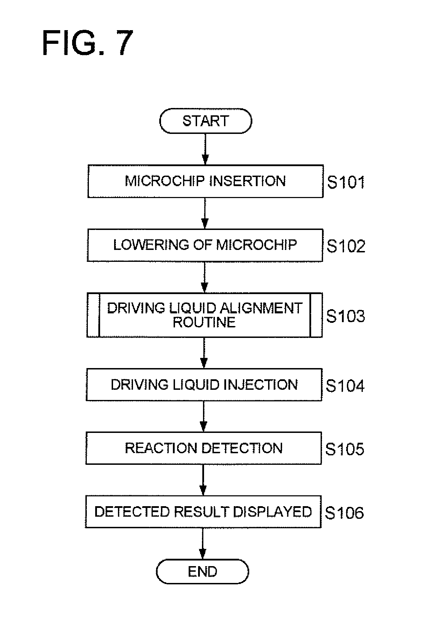

Fig. 7 shows a flowchart to explain the procedure of inspection with microchip inspection system 80 in the embodiment of the present invention.

Incidentally, temperature adjusting unit 152 is turned on during applying a power source of reaction-detecting apparatus 82, and has been set to the predetermined temperature.

S101 is a step of inserting microchip 1.

A person in charge of inspection inserts microchip 1 from insertion slot 83 until touching the unshown regulation member.

S102 is a step of lowering the mechanism.

When microchip 1 inserted from insertion slot 83 touches the unshown regulation member, and CPU 98 senses the sensing signal from chip sensing section 95, CPU 98 controls mechanism driving section 32 to lower the microchip until it is closely attached to packing 92 and temperature adjusting unit 152 at an appropriate pressure.

S103 is a step of moving the driving liquid to the predetermined position.

CPU 98 calls up the driving liquid alignment routine described in detail later to move the driving liquid, and an edge of the driving liquid is moved to the predetermined position of intermediate flow path 182.

S104 is a step of injecting the driving liquid into microchip 1.

Pump driving control section 412 commands to pump driving section 500 in accordance with the predetermined sequence to drive micropump MP, and the driving liquid is sequentially injected into driving liquid injection section 110 of microchip 1. The injected driving liquid is reacted by feeding a specimen and a reagent in the inside of a flow path of microchip 1 in accordance with the predetermined sequence.

S105 is a step of detecting the reaction result of detection section 111.

After spending the predetermined reaction time, CPU 98 lets light emission section 150a emit light to illuminate detection 111 of microchip, and input signal from light reception section 150b in which transmitted light passing through detection section 111 has been received is converted into a digital value via A/D converter installed in CPU 98 to obtain photometric data.

S106 is a step of displaying the reaction result.

CPU98 performs an arithmetrical operation via the photometric result of light detection section 150, and the reaction result is displayed in display section 84.

As described above, the procedure of inspection is completed.

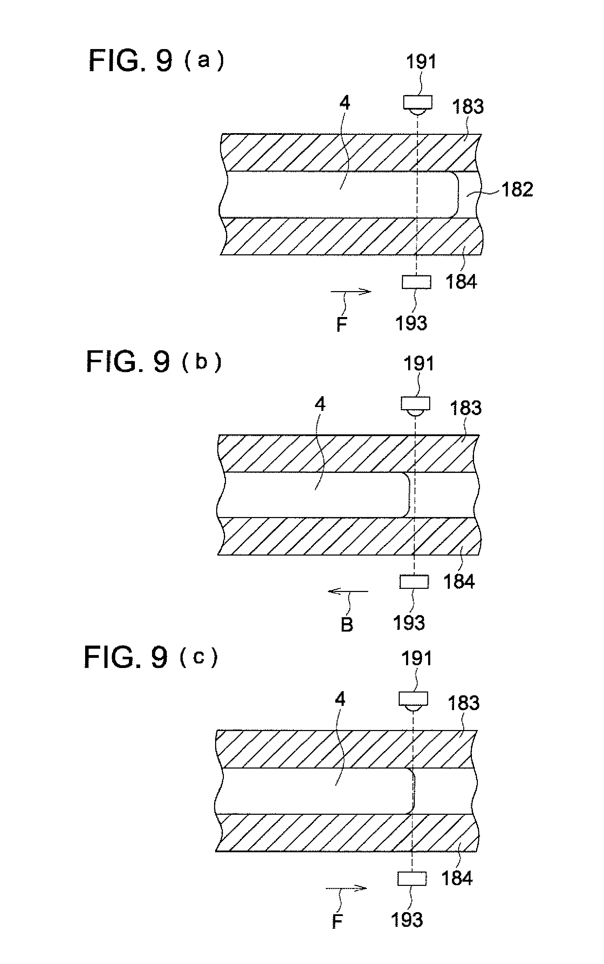

Next, the procedure of the driving liquid alignment routine will be described referring to Fig. 8, and Fig. 9(a), Fig. 9(b) and Fig. 9(c). Fig. 8 shows a flowchart of the driving liquid alignment routine, and each of Fig. 9(a), Fig. 9(b) and Fig. 9(c) shows an illustrative diagram to explain movement of driving liquid 4 during sensing the driving liquid. Each of Fig. 9(a), Fig. 9(b) and Fig. 9(c) shows a cross-sectional view of an enlarged portion in which driving liquid sensing device 190 of intermediate flow path 180 is provided, and also indicates the position of an edge of driving liquid 4 in the inside of intermediate flow path 182.

Next, Fig. 9(a), Fig. 9(b) and Fig. 9(c) will be described along with the flowchart in Fig. 8.

S201 is a step of determining whether or not sensing section 310 senses the driving liquid.

Driving liquid sensing section 410 determines whether or not sensing section 310 senses driving liquid.

In the case of sensing driving liquid 4, (Step S201; Yes) goes to Step S202.

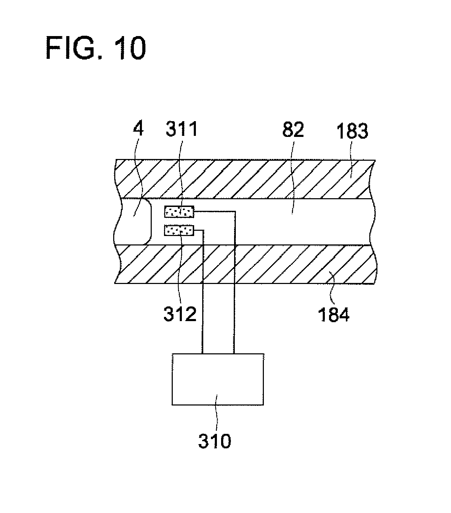

Fig. 10 shows the case where sensing section 310 senses driving liquid 4.

S202 is a step of feeding liquid in the opposite direction.

Pump driving control section 412 commands to pump driving section 500 to feed liquid in the opposite direction by driving micropump MP. In addition, the opposite direction means an opposite direction of the direction of injecting driving liquid 4 into microchip 1, and it is represented by arrow B in Fig. 9(b).

In the case of not sensing driving liquid, (Step S201; No) goes to Step S203.

S203 is a step of stopping pumpdriving

Pump driving control section 412 commands to pump driving section 500 to stop driving micropump MP. In addition, in the case of not driving the micropump, nothing is conducted.

S204 is a step of feeding liquid in the forward direction.

Pump driving control section 412 commands to pump driving section 500 to feed liquid at slow flow rate in the forward direction by driving micropump MP. In addition, the forward direction means the direction of injecting driving liquid into microchip 1, and it is represented by arrow F in Fig. 9(c).

S205 is a step of determining whether or not sensing section 310 senses driving liquid.

Driving liquid sensing section 410 determines whether or not first sensing section 320 senses driving liquid.

In the case of sensing driving liquid 4, (Step S205; Yes) goes to Step S206.

In the case of not sensing driving liquid 4, (Step S205; No) goes back to Step S205. Fig. 9(c) shows a situation where in Step S205, driving liquid 4 is fed in the forward direction, and fed up to a position at which sensing section 310 has sensed driving liquid 4.

S206 is a step of stopping pumpdriving.

Pump driving control section 412 commands to pump driving section 500 to stop driving micropump MP. In addition, the present invention is not limited to an instant stopping control, and the driving liquid may be stopped at a position based on the predetermined driving liquid sensing device position as a reference position by driving for the predetermined pulse number or the predetermined duration. A position based on the predetermined driving liquid sensing device position as a reference position means, for example, an arbitrary position on the downstream side of driving liquid sensing device 190 in intermediate flow path 182, a position around packing 92 or such.

With that, the subroutine is terminated, going back to the main routine.

In this way, since pump driving control section 412 moves driving liquid 4 to a position based on the predetermined driving liquid sensing device position as a reference position prior to step S104 in which micropump MP injects driving liquid into microchip 1, an amount of driving liquid filled in intermediate flow path 182 remains constant at any time. Thus, timing, liquid quantity and a change rate in liquid quantity to feed liquid into the predetermined sections in a microchip can be controlled with no margin of error to feed the predetermined liquid.

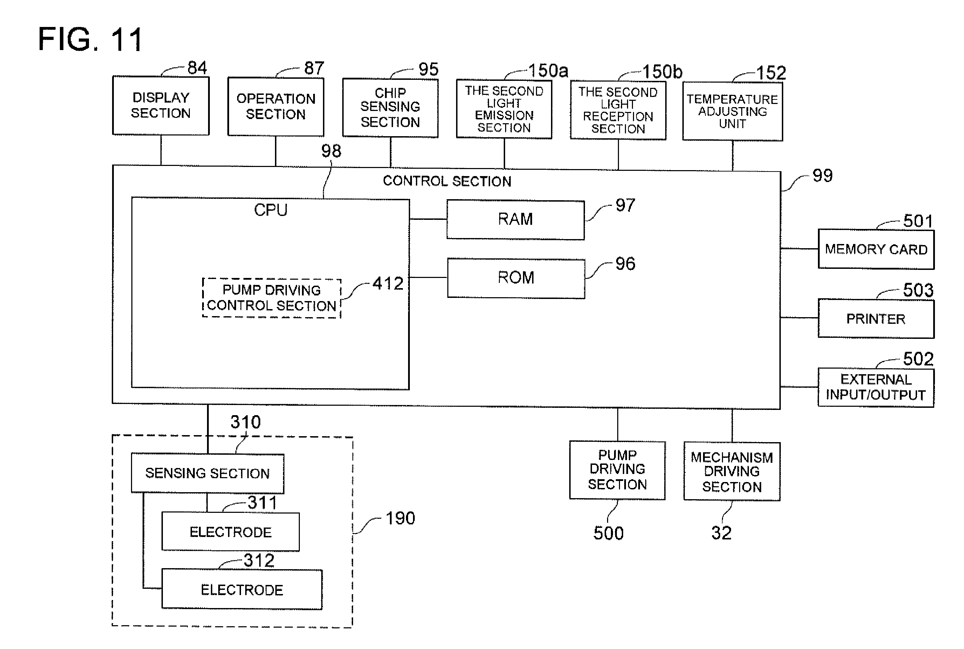

Next, driving liquid sensing device 190 installed in microchip inspection system 80 of the second embodiment will be described in Fig. 10 and Fig. 11. Fig. 10 shows a cross-sectional view of an example of driving liquid sensing device 190 installed in microchip inspection system 80 in the second embodiment. Fig. 11 shows a circuit block diagram of reaction-detecting apparatus 82 in the second embodiment. After this, the same numbers will be provided for the same functional elements as described before, and the description is omitted.

Driving liquid sensing device 190 of the present embodiment is composed of two electrodes provided on the internal wall of intermediate flow path 182, and sensing section 310 to sense driving liquid via change in current running at a time when driving liquid 4 touches the region between the electrodes, after applying voltage between the electrodes. Sensing section 310 is equipped with a power supply to apply voltage between electrode 311 and electrode 312, and a circuit to sense current between electrode 311 and electrode 312. Sensing section 310 compares a current value between electrode 311 and electrode 312 with the predetermined current value which has been set in advance, whereby a sensing signal is output when the current value between electrode 311 and electrode 312 is larger than the predetermined current value which has been set in advance.

A sensing signal output by sensing section 310 is input into CPU 98 in Fig. 11.

Each process is conducted based on the sensing signal of sensing section 310 by the procedure of inspection with reaction-detecting apparatus 82, similarly to the procedure described in Fig. 7, Fig. 8, Fig. 9(a), Fig. 9(b) and Fig. 9(c).

Since in the present embodiment, electrodes are provided on the internal wall of intermediate flow path 182, the flexible displacement is large, and can also be applied to an opaque flow path.

As described above, in such the way, it is possible in the present invention to provide a microchip inspection system in which an amount of driving liquid filled in a flow path between a micropump and a microchip is kept constant before feeding the driving liquid into the microchip to control liquid-feeding with accuracy, and also to provide a microchip inspection system program.

### [EFFECT OF THE INVENTION]

In the present invention, an amount of a driving liquid filled in a flow path between a micropump and a microchip can be kept constant before feeding the driving liquid into the microchip to control liquid-feeding with accuracy.

## Claims

1. A microchip inspection system comprising
(a) a micropump by which driving liquid is injected into a microchip from a flow path;
(b) a driving liquid sensing device by which a sensing signal is output by sensing presence or absence of the driving liquid at a predetermined position of the flow path; and
(c) a pump driving control section by which the driving liquid is moved to a position based on the predetermined position as a reference position by driving the micropump in response to the sensing signal obtained from the driving liquid sensing device.

2. The microchip inspection system of Claim 1,
wherein the driving liquid sensing device comprises a light emission section by which light is emitted toward the flow path from a direction perpendicular to the flow path; a reception section by which light from the light emission section that passes through the flow path is received to generate a signal corresponding to the light quantity; and a sensing section by which a sensing signal is output by comparing a signal of the reception section with a predetermined value.

3. The microchip inspection system of Claim 1,
wherein the driving liquid sensing device further comprises two electrodes placed in the flow path, and a sensing section by which a sensing signal is output by comparing an electrical signal running between the two electrodes with a predetermined value.

4. A microchip inspection system program commanded by a computer, comprising
(a) a driving liquid sensing step to output a sensing signal by sensing presence or absence of the driving liquid with a driving liquid sensing device placed at a predetermined position of a flow path to a microchip before a step to inject the driving liquid with a micropump; and
(b) a liquid-feeding step to move the driving liquid to a position based on the predetermined position as a reference position by driving the micropump in response to the sensing signal output in the driving liquid sensing step.
